# EUROPEAN PATENT SPECIFICATION

(11) **EP 2 039 652 B1**
(45) Date of publication and mention of the grant of the patent: **16.06.2010**
(21) Application number: 08164769.5
(22) Date of filing: 22.09.2008
(51) Int. Cl.: C01B 31/02, H01M 2/16, H01M 6/12, H01M 6/22, H01M 4/04

(54) **Thin battery with longer life time**
Dünnbatterie mit längerer Lebenszeit
Batterie mince dotée d'une longue durée de vie

(30) Priority: 24.09.2007 FI 20070724
(43) Date of publication of application: 25.03.2009
(73) Proprietor: ENFUCELL OY, 02150 Espoo (FI)
(72) Inventor: Zhang, Xia-Chang, 02200, Espoo (FI); Talo, Anja, 02600, Espoo (FI); Hongyang, Ning, 02150, Espoo (FI)
(74) Representative: Söderman, Päivi Karin Lisbeth

(56) References cited:
- WO-A-03/069700
- WO-A-2008/124167
- LV J ET AL: "Effects of carbon nanotubes on the high-rate discharge properties of nickel/metal hydride batteries" JOURNAL OF POWER SOURCES, ELSEVIER, AMSTERDAM, NL, vol. 132, no. 1-2, 20 May 2004 (2004-05-20), pages 282-287, XP004504633 ISSN: 0378-7753
- WU J B ET AL: "Electrochemical investigation on addition of CNTs to the positive electrodes for Ni/MH rechargeable batteries" JOURNAL OF ALLOYS AND COMPOUNDS, ELSEVIER SEQUOIA, LAUSANNE, CH, vol. 449, no. 1-2, 31 January 2008 (2008-01-31), pages 349-352, XP022761041 available online: 05.02.2007 ISSN: 0925-8388 [retrieved on 2008-01-31]
- KIEBELE A ET AL: "Carbon nanotube based battery architecture" APPLIED PHYSICS LETTERS, AIP, AMERICAN INSTITUTE OF PHYSICS, MELVILLE, NY, vol. 91, no. 14, 3 October 2007 (2007-10-03), pages 144104-144104, XP012099613 ISSN: 0003-6951

## Description

### TECHNICAL FIELD

The invention is concerned with a thin battery comprising an anode material and a cathode material applied as pastes on one or more separator paper layers there between, and electrolyte. The cathode paste furthermore comprises conductive material.

### BACKGROUND

The basic components of a battery are the electrodes with terminals to connect to an external circuit, a separator to keep the electrodes apart and prevent them from shorting, the electrolyte which carries the charged ions resulting from the chemical reactions taking place at the electrodes and a cover to contain the active chemicals and hold the electrodes in place.

The chemical reactions made use of in batteries involve oxidation and reduction reactions (redox reactions). There are two broad classes of batteries, i.e. liquid state batteries (sc. "wet" batteries), in which the electrolyte is liquid or wet and solid state batteries (sc. "dry batteries"), in which the electrolyte is in a solid state. All batteries utilize similar procedures to create electricity; however, variations in materials and construction have produced different types of batteries. Even traditional batteries using Zn/MnO₂ as electrodes are often called dry batteries even if they are not really dry as they require a water solution of electrolyte.

Batteries are often classified by the type of electrolyte used in their construction. There are three common classifications; acid, mildly acid, and alkaline. Different examples of electrolytes are acids, such as sulfuric acid, salts, such as ammonium chloride and zinc chloride, and alkalis, such as sodium hydroxide or potassium hydroxide. The electrolyte solution can e.g. contain ZnCl₂ as a main ingredient as well as additive(s) as other ingredient(s), such as for example binder(s) in the Zinc/manganese dioxide battery. The additive(s) in the electrolyte solution comprises binder(s) in order to bind the electrode material particles to the electrode paste. The binder is e.g. polyvinyl alcohol (PVA).

In addition to acid, mildly acid, and alkaline electrolytes, the electrolyte might be an organic solution. For example batteries of Li-type are not suitably working in an acidic or alkaline environment. They are primarily working in solid or organic ionic liquid environments.

Thin film batteries, which term in this text is to be understood as "layered-structured batteries" in any shape or size, and flexible batteries can be made by printing on to paper, plastics, or other kind of thin foil.

Because of their relatively small thickness, the energy storage and current carrying capacity of thin film batteries is low, these properties being, however, dependent on their area as well and can be made sufficient for desired applications. They have unique properties which distinguish them from conventional batteries, and in fact the capacity is still enough for a lot of applications. Thin film batteries have e.g. a wide range of uses as power sources for consumer products and for micro-sized applications. Thin film batteries are flexible and also suitable for powering smart cards and Radio Frequency IDentification (RFID) tags.

The anode material in a battery may be e.g. Cu, Pb, Ni, Fe, Cr, Zn, Al, Mg or Li, while the cathode may be e.g. of Ferrate, Iron oxide, Cuprous oxide, Cupric oxide, Cobaltic oxide, Manganese dioxide, Lead dioxide, Silver oxide, Nickel oxyhydroxide, Nickel dioxide, Silver peroxide, Permanganate, or Bromate. E.g. a carbon/zinc cell "dry" battery uses a zinc anode, a manganese dioxide cathode, and an electrolyte of ammonium chloride and/or zinc chloride dissolved in water.

The electrodes are formed of the anode and the cathode. The anode material can in thin film batteries e.g. consist of a paste containing an anode active material and electrolyte solution with additives and the cathode material can consist of a paste containing a cathode active material and electrolyte solution with additives. The application method used to apply the cathode paste and the anode paste is e.g coating or printing.

Conductive material is added to the anode and cathode pastes. The conductive material can be carbon powder, such as graphite powder, soot, or carbon black or combinations thereof in an amount of ca 1 - 5% in the anode paste and in an amount of 5 - 20% in the cathode paste (because MnO₂ is not conductive enough).

The electrodes are connected to a collector material and the whole product is covered in an envelope. The envelope cover can be of e.g. polypropylene, polyethylene, polyester or other known cover materials. The collector material is formed to have terminals outside the layers to be connected to an external circuit. The collector material can be conductive carbon ink, carbon film or other material, which is chemically inert but conductive enough for the purpose.

The earlier application FI 20070584 of the applicant is mentioned as prior art.

High capacity cells require large volumes of electrolyte that must be accommodated between the electrodes. The more electrolyte and electrode material there is in the cell, the greater is the capacity of the cell. Thus, a small cell has less capacity than a larger cell, given the same chemistry, though they develop the same open-circuit voltage.

However, if the cell is too wet, e.g. it has too much electrolyte solution in the cell, it will have fast self discharge rate, which eventually reduces the life time of the cell. The cover should therefore have a low permeability for water vapour in order to prevent leakage of electrolyte. Leakage of electrolyte drastically shortens the lifetime of the battery. In many batteries, a certain moisture level in the cell is a must request for a battery to have a longer shelf life time.

A layered structure "thin" battery should thus have a case with a low permeability for water vapour and a high permeability to gases formed inside the battery to avoid shortening of the lifetime. Of this reason metal foils with a ventilation channel have been used as case materials in traditional batteries.

Metal foils can, however, not be used for flexible (soft) batteries, since metal is not a flexible material. Therefore, different polymer cases have been used for flexible thin batteries. To avoid evaporation of electrolyte, attempts have been made to find the best possible polymer material for the casing, but the solutions found are not satisfactory.

Carbon nanotubes (CNTs) are allotropes of carbon forming molecular-scale tubes of graphitic carbon with outstanding properties. A single wall carbon nanotube is a one-atom thick graphene sheet of graphite (called graphene) rolled up into a seamless cylinder with a diameter of the order of nanometers. This results in a nanostructure where the length-to-diameter ratio exceeds 10,000. Such cylindrical carbon molecules have novel properties, optics and other fields of materials science. They exhibit extraordinary strength and unique electrical properties and are efficient conductors of heat. They are among the stiffest and strongest fibres known, and have remarkable electronic properties and many other unique characteristics. For these reasons they have attracted huge academic and industrial interest, with thousands of papers on nanotubes being published every year. Commercial applications have, however, been rather slow to develop, however, primarily because of the high production costs of the best quality nanotubes.

There are two main types of nanotubes: single-walled nanotubes (SWNTs) and multi-walled nanotubes (MWNTs). Multi-walled nanotubes (MWNT) consist of multiple layers of graphite rolled in on themselves to form a tube shape.

The carbon nanotubes' tiny tubular structures composed of a single layer of carbon atoms could increase the capacity of batteries, according to new research. Findings published in the current issue of Physical Review Letters suggest that the diminutive tubes can hold twice as much energy as graphite, the form of carbon currently used as an electrode in many rechargeable lithium batteries. The reduction and oxidation reactions that occur at the electrodes of batteries produce a flow of electrons that generate and store energy. Subsequent tests of their energy-holding potential, conducted using electrochemistry and nuclear magnetic resonance spectroscopy, revealed an electrical storage capacity approximately double that of graphite. In explanation, the scientists note that the tubes' open ends facilitated the diffusion of lithium atoms into their interiors.

In lithium type batteries, carbon tubes have been mentioned as a new alternative in e.g. the following publications.

KR patent application 20040026207 presents such a battery solution for a lithium-sulfur battery. The cathode active material for the lithium-sulfur battery comprises complex agglomerate with a sulfur-conductive material comprising a sulfur particle on the surface where a conductive material particle is attached. The conductive material is selected from the group consisting of carbon black, graphite, carbon fiber, a carbon nanotube, activated carbon, carbon produced by heating coke or pitch, metal powder, a metal compound, or a mixture thereof.

Another such battery solution is presented in KR patent application 20040092140. A micro battery with a carbon nanotube is provided to inhibit the degradation phenomenon and to increase service life and stability of the battery significantly. The micro battery includes a cathode, an anode and an electrolyte, wherein the anode comprises a carbon nanotube formed on an anode current by deposition process such as chemical vapor deposition (CVD). Particularly, the anode current collector is formed by putting metal on a substrate, applying a catalytic metal such as nickel to grow the carbon nanotube and then, optionally performing plasma treatment or catalyst cleaning treatment. In the electrolyte, a solid polymer is employed. The cathode comprises lithium metal oxide.

Still one reference is the Japanese publication JP7014582. It is concerned with a nonaqueous electrolytic battery whose internal resistance is reduced. Its battery electrode contains as positive electrode active material a manganese dioxide or lithium transition metal oxide, and as a positive electrode electro-conductivity giving agent, a carbonaceous material containing carbon nanotube or carbonaceous material containing carbon nanotube including metal ions is added.

The object for this invention is an improved thin and flexible wet battery with a longer lifetime and which solves the above mentioned prior art problem of electrolyte evaporation.

### SUMMARY OF THE INVENTION

The flexible thin battery having a polymer case of the invention comprises an anode material and a cathode material applied as pastes on one or more separator paper layers there between. The battery also comprises an aqueous electrolyte solution, binders and additives. The cathode paste furthermore comprises conductive material at least partly of carbon nanotubes.

The conductive material can additionally comprise one or more other allotropes of carbon, such as carbon powder, e.g. graphite powder.

The preferable embodiments of the invention have the characteristics of the subclaims.

In the invention it was found that when carbon nanotubes are used in wet batteries using aqueous electrolyte solution, a surprising effect occurs. As was stated in the background section, leakage of electrolyte drastically shortens the lifetime of the battery, especially in normal acidic and alkaline wet batteries. As carbon nanotube materials are very expensive materials for the time being, the use of them just because of their conductivity purpose would not be motivated as other materials, like ordinary graphite powder, are equally useful. This effect of the nanotubes, making the batteries more long lasting, is expected to justify and motivate the use of carbon nanotubes in alkaline and acidic thin batteries using aqueous electrolyte solutions.

When carbon nanotubes are introduced in an acidic or alkaline wet battery according to the invention, battery lifetime increases considerably. Besides other acknowledged properties of the nanotubes, i.e. its low density (for a solid 1.3 to 1.4 g/cm³ normal graphite has a density over 2.0 g/cm³) and its metallic and high conductivity for Multi Wall NanoTubes (MWNT), it has a high capacity for holding more electrolyte solution. Tests show that this is a consequence of the presence of the nanotubes. The reason for the property to hold more electrolyte solution is that the tubes absorb moisture inside and the electrolyte will be released only when needed.

Both low density and high conductivity make the thin and flexible battery working properly without increasing the weight and the internal resistance of the cell. The tubular structure of carbon nanotubes has a property to hold more electrolyte solution, which gives our battery a longer life time comparing to using carbon powder alone as conductive particles in the cathode paste. The total amount of carbon (carbon powder + carbon nanotubes) will remain the same as in previous solutions, i.e. a part of the carbon powder is substituted by the nanotubes.

It is not only most important to have conductive material in the cathode paste but also the anode material usually comprises some conductive material. Analogously, it is more important to replace a part of the carbon graphite powder with carbon nanotubes in the cathode paste, but also the conductive material in the anode paste can, if desired, be replaced with carbon nanotubes.

Tests have shown that the carbon nanotubes work extremely well at least in thin batteries wherein the active cathode material preferably is manganese dioxide (MnO₂) the active anode material is Zinc (Zn), and the electrolyte is Zinc Chloride (ZnCl₂). The electrolyte solution contains Poly Vinyl Alcohol (PVA) and other additives as binder in a known manner.

The carbon nanotubes tested had an inner diameter of 5 - 15 nm and a tube length of 10 - 20 µm. It is, however, clear for one skilled in the art that the inventive effect is not restricted to just these tested dimensions. The amount of carbon nanotubes of the conductive material can suitably be e.g. 5 - 100 %, preferably 20 - 40%. The tested carbon nanotubes are of multi-wall type.

In the following the inventive effect will be shown by means of some tests described in the following examples.

### EXAMPLES

The inventive effect of the invention was tested by means of batteries of the following composition
Battery construction used in the test:
Electrolyte: ZnCl₂
Cathode active material: MnO₂
Anode active material: Zn
Separator: paper
Sealing material: polymer films
Collector: conductive ink
Binder: PVA and additives
Conductive material: graphite powder and different amounts of carbon nanotubes

### EXAMPLES 1 - 4

Test batteries were prepared by coating anode and cathode pastes on separator papers. The anode paste containing active anode material and an aqueous electrolyte solution comprising the ZnCl₂ electrolyte, PVA binder and other additives were coated on a separator paper. The cathode paste containing similar electrolyte solution was coated on another separator paper. The layers coated with the anode and cathode pastes were then laminated together with the cathode and anode layers outside and the electrolyte there between. Thereafter anode collector material was added on the anode side of the product and cathode collector material on the cathode side of the product. Last, a sealing material was added on both sides to form an envelope around the product. The sealing material used was a polymer film.

Four different tests were made for batteries, wherein a part of the carbon powder material was replaced by carbon nanotube material. The first one being the prior art test contained only carbon powder as the conductive material in the cathode paste. In the three other tests 20%, 40% and 60% respectively of the carbon powder in the cathode paste was replaced by carbon nanotube material.

The carbon nanotube material used was of multi wall carbon nanotube type of the commercial Timesnano material of product number M1208, purity > 95%, Inner diameter = 5 - 15 nm, Tube length 10 - 20 µm, Specific Surface Area (SSA) >40 m²/g

The carbon powder used was graphite one from Riedel-de-Haën, product no 15553, particle size (96% of the particles) < 0.01 mm.

The test results are presented in the following table

| Test no | Carbon powder (g) | Carbon nano tubes (g) | Percentage of carbon nanotubes | Electrolyte solution (g) | Capacity (mAh) (3 months) | Capacity (mAh) (much longer time) |
|---|---|---|---|---|---|---|
| 1 | 1.5 | 0 | 0 | 8.4 | 62 | 9 |
| 2 | 1.2 | 0.3 | 20% | 9.5 | 69 | 21 |
| 3 | 0.9 | 0.6 | 40% | 11.8 | 73 | 31 |
| 4 | 0.6 | 0.9 | 60% | 15.1 | 75 | 31 |

From the results it can clearly be seen that the battery with carbon nanotubes keeps higher capacity for a longer time. The shelf life time of the battery increases with the increase of percentage of the carbon nanotubes. The results also illustrate that the battery with more carbon nanotubes holds more electrolyte solution, which is a clear indication of that the nanotubes absorb electrolyte solution but still keeps the battery rather "dry". The rather "dry" battery makes the self discharge lower.

According to the table, it is optimal to use 40% of nanotubes of the total carbon amount; thereafter the difference is not so significant anymore.

The capacity is larger by about 20 % from the cells with more than 40 % carbon nanotube than the cells without carbon nanotube after 3 month storage time. It is also clear from the results that the difference becomes much larger after much longer storage time.

## Claims

1. A flexible thin battery having a polymer case and comprising an anode material and a cathode material applied as pastes on one or more separator paper layers there between, and an aqueous electrolyte solution, binders and additives, the cathode paste furthermore comprising conductive material, **characterized in that** the conductive material comprises carbon nanotubes.

2. Thin battery of claim 1, **characterized in that** it is an acidic or alkaline thin battery.

3. Thin battery of claim 1 or 2, **characterized in that** the conductive material additionally comprises one or more other allotropes of carbon.

4. Thin battery of claim 3, **characterized in that** the conductive material additionally comprises carbon graphite powder.

5. Thin battery of any of claims 1 - 4, **characterized in that** also the anode material comprises conductive material.

6. Thin battery of any of claims 1 - 5, **characterized in that** the active cathode material is MnO₂, the active anode material is Zn, and the electrolyte is ZinCl2.

7. Thin battery of any of claims 1 - 6, **characterized in that** the electrolyte solution contains Poly Vinyl Alcohol (PVA) and other additives as binder.

8. Thin battery of any of claims 1 - 7, **characterized in that** the inner diameter of the carbon nanotubes is 1 - 50 nm, preferably 5 - 20 nm and the tube length is 5 - 50 µm, preferably 10 - 25 µm.

9. Thin battery of any of claims 1 - 8, **characterized in that** the amount of carbon nanotubes of the conductive material is 5 - 100 %, preferably 20 - 40%.

10. Thin battery of any of claims 1 - 9, **characterized in that** the carbon nanotubes are of multi-wall type.

## Patentansprüche

1. Flexibler dünner Akkumulator, der ein Polymergehäuse aufweist und ein Anodenmaterial und ein Kathodenmaterial, die als Pasten auf eine oder mehrere Separatorpapierlagen dazwischen aufgetragen sind, und eine wässrige Elektrolytlösung, Bindemittel und Zusatzmittel umfasst, welche Kathodenpaste des Weiteren leitfähiges Material umfasst, **dadurch gekennzeichnet, dass** das leitfähige Material Kohlenstoffnanoröhrchen umfasst.

2. Dünner Akkumulator nach Patentanspruch 1, **dadurch gekennzeichnet, dass** er ein dünner Säure- oder Alkaliakkumulator ist.

3. Dünner Akkumulator nach Patentanspruch 1 oder 2, **dadurch gekennzeichnet, dass** das leitfähige Material zusätzlich ein oder mehrere andere Allotrope von Kohlenstoff umfasst.

4. Dünner Akkumulator nach Patentanspruch 3, **dadurch gekennzeichnet, dass** das leitfähige Material zusätzlich Kohlenstoff-Graphit-Pulver umfasst.

5. Dünner Akkumulator nach einem der Patentansprüche 1 bis 4, **dadurch gekennzeichnet, dass** auch das Anodenmaterial leitfähiges Material umfasst.

6. Dünner Akkumulator nach einem der Patentansprüche 1 bis 5, **dadurch gekennzeichnet, dass** das aktive Kathodenmaterial MnO₂ ist, das aktive Anodenmaterial Zn ist und der Elektrolyt ZnCl₂ ist.

7. Dünner Akkumulator nach einem der Patentansprüche 1 bis 6, **dadurch gekennzeichnet, dass** die Elektrolytlösung Polyvinylalkohol (PVA) und andere Zusatzmittel als Bindemittel enthält.

8. Dünner Akkumulator nach einem der Patentansprüche 1 bis 7, **dadurch gekennzeichnet, dass** der lichte Durchmesser der Kohlenstoffnanoröhrchen 1 bis 50 nm, bevorzugt 5 bis 20 nm, und die Röhrchenlänge 5 bis 50 µm, bevorzugt 10 bis 25 µm, ist.

9. Dünner Akkumulator nach einem der Patentansprüche 1 bis 8, **dadurch gekennzeichnet, dass** der Anteil der Kohlenstoffnanoröhrchen des leitfähigen Materials 5 bis 100 %, bevorzugt 20 bis 40 %, ist.

10. Dünner Akkumulator nach einem der Patentansprüche 1 bis 9, **dadurch gekennzeichnet, dass** die Kohlenstoffnanoröhrchen vom Typ her mehrwandig sind.

## Revendications

1. Pile mince flexible avec un boîtier en polymère et comprenant un matériau de l'anode et un matériau de cathode appliqués comme des pâtes sur une ou plusieurs couches de papier séparateur entre les couches, et une solution aqueuse électrolyte, des liants et des additifs, la pâte de cathode comprenant encore un matériau conducteur, **caractérisée en que** le matériau conducteur comprend des nanotubes de carbone.

2. Pile mince selon la revendication 1, **caractérisée en qu'**elle est une pile mince acide ou alcaline.

3. Pile mince selon la revendication 1 ou 2, **caractérisée en que** le matériau conducteur comprend en plus une ou plusieurs autres allotropes de carbone.

4. Pile mince selon la revendication 3, **caractérisée en que** le matériau conducteur comprend en plus une poudre de graphite de carbone.

5. Pile mince selon l'une quelconque des revendications 1 à 4, **caractérisée en que** le matériau de l'anode comprend également un matériau conducteur.

6. Pile mince selon l'une quelconque des revendications 1 à 5, **caractérisée en que** le matériau de cathode actif est de MnO₂, le matériau actif de l'anode est de Zn, et l'électrolyte est de ZnCl2.

7. Pile mince selon l'une quelconque des revendications 1 à 6, **caractérisée en que** la solution électrolyte contient de l'alcool polyvinylique (PVA) et d'autres additifs en tant que liant.

8. Pile mince selon l'une quelconque des revendications 1 à 7, **caractérisée en que** le diamètre interne des nanotubes de carbone est de 1 à 50 nm, préférablement de 5 à 20 nm et la longueur du tube de 5 à 50 µm, préférablement de 10 à 25 µm.

9. Pile mince selon l'une quelconque des revendications 1 à 8, **caractérisée en que** la quantité de nanotubes de carbone du matériau conducteur est de 5 à 100 %, préférablement de 20 à 40 %.

10. Pile mince selon l'une quelconque des revendications 1 à 9, **caractérisée en que** les nanotubes de carbone sont de type multi-parois.
